(19) Europäisches Patentamt / European Patent Office / Office européen des brevets

(11) **EP 1 716 333 B1**

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(21) Anmeldenummer: 05716658.9

(22) Anmeldetag: **10.02.2005**

(51) Int Cl.:
**F03D 1/06** (2006.01)

(86) Internationale Anmeldenummer:
**PCT/EP2005/050585**

(87) Internationale Veröffentlichungsnummer:
**WO 2005/078277 (25.08.2005 Gazette 2005/34)**

(54) **ROTORBLATT EINER WINDENERGIEANLAGE**

ROTOR BLADE FOR A WIND TURBINE

PALE D'UNE INSTALLATION D'ENERGIE EOLIENNE

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**LV**

(30) Priorität: **13.02.2004 DE 102004007487**

(43) Veröffentlichungstag der Anmeldung:
**02.11.2006 Patentblatt 2006/44**

(60) Teilanmeldung:
**11186609.1 / 2 420 671**

(73) Patentinhaber: **Wobben Properties GmbH**
**26607 Aurich (DE)**

(72) Erfinder: **Wobben, Aloys**
**26607 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
| | |
|---|---|
| **EP-A- 0 094 064** | **WO-A-2004/067956** |
| **DE-A1- 3 825 241** | **DE-C- 830 627** |
| **GB-A- 612 413** | **US-A- 2 576 981** |
| **US-A- 4 245 804** | **US-A- 4 329 115** |
| **US-A- 4 408 958** | **US-A- 4 722 499** |
| **US-A- 5 407 153** | |

- **ROBERT GASCH: "Windkraftanlagen" 1996, TEUBNER , STUTTGART , XP002329739 Seite 126 - Seite 129 Abbildung 5.10**
- **ERICH HAU: "Windkraftanlagen" 1996, SPRINGER , BERLIN , XP002329740 Seite 101 - Seite 109 Abbildung 5.41**

EP 1 716 333 B1

**Beschreibung**

Die Erfindung betrifft ein Rotorblatt einer Windenergieanlage sowie eine Windenergieanlage mit einem Rotor mit solchen Rotorblättern.

Das Verhalten einer Windenergieanlage, insbesondere deren Effizienz wird zu einem nicht geringen Teil durch die Rotorblätter bzw. die Rotorblattauslegung bestimmt. Die Rotorblätter werden durch eine Vielzahl von Parametern beschrieben, wobei an dieser Stelle allgemein als Stand der Technik auf das Buch Erich Hau, Windkraftanlagen, 3. Auflage, 2002, insbesondere die dortigen Seiten 90 ff. verwiesen wird. Der Inhalt dieses Buches ist auch gleichzeitig Grundlage der vorliegenden Anmeldung und auch Inhalt dieser Anmeldung, soweit dies für die vorliegende Anmeldung benötigt wird.

Wie erwähnt, wird die Leistungsfähigkeit wie auch das Regelverhalten von Windenergieanlagen in nicht geringem Ausmaß durch die aerodynamischen Eigenschaften der verwendeten Rotorblattprofile geprägt. Eine wichtige Kenngröße eines Rotorblattprofils ist charakterisiert durch das Verhältnis von Auftriebsbeiwert $c_a$ und Widerstandsbeiwert $c_w$:

$$\frac{c_a}{c_w} = E$$

wobei E als Gleitzahl bezeichnet wird.

Ferner ist eine wichtige Kenngröße eines Rotorblatts die Schnelllaufzahl $\lambda$, wobei die Schnelllaufzahl definiert ist durch den Quotienten aus der Umfangsgeschwindigkeit (u) der Blattspitze des Rotorblattes und der Windgeschwindigkeit v.

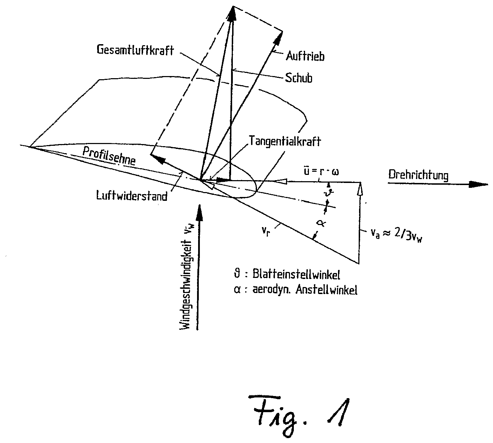

In Fig. 1 sind die bekannten Anströmverhältnisse und die Luftkräfte am Profilquerschnitt eines Blattelementes dargestellt.

Wenn man die Profile bekannter Rotorblätter untersucht, stellt man einen besonderen Zusammenhang zwischen der Gleitzahl und dem Anstellwinkel fest. Man erkennt nämlich, dass die Gleitzahl in hohem Maße abhängig ist vom jeweiligen Anstellwinkel und typischerweise wird eine hohe Gleitzahl nur in einem ganz eingeschränkten Anstellwinkelbereich erzielt. So kann beispielsweise eine hohe Gleitzahl erreicht werden, wenn der Anstellwinkel (eines Rotorblatts) im Bereich von 6° liegt und gleichzeitig sinkt aber die Gleitzahl stark ab, sobald der Bereich von 6° geringfügig unter- bzw. überschritten wird.

Wenn der Bereich der optimalen Gleitzahl verlassen wird, also der Anstellwinkel deutlich ungleich des optimalen Anstellwinkels, z.B. 6° liegt, ist leicht ersichtlich, dass die gesamte Effizienz der Anlage geringer ist mit der Folge, dass die Windenergieanlage dazu neigen wird entweder den Anstellwinkel wieder auf den optimalen Werte einzustellen, z.B. pitchen und/oder den gesamten Rotor durch Ausrichtung der Gondel optimal in den Wind zu stellen.

Die Größe der Rotoren von Windenergieanlagen haben in den letzten Jahren stets zugenommen und überstrichene Rotorflächen von 10000 qm sind mittlerweile nicht mehr Theorie, sondern Praxis geworden, z.B. bei einer Windenergieanlage vom Typ E112 der Firma Enercon. Dabei handelt es sich um eine Windenergieanlage, deren Rotordurchmesser etwa 112m beträgt.

Es ist nun praktisch unmöglich, das Optimum der Gleitzahl über alle Bereiche des Rotorblattes zu erreichen, weil bei der sehr großen überstrichenen Fläche nicht mehr angenommen werden kann, dass der Wind stets aus der gleichen Richtung und stets mit gleichbleibender Geschwindigkeit anströmt.

Die Folge dessen ist, dass zwar in einigen Bereichen das Rotorblatt oder die Rotorblätter im relativ optimalen Betrieb arbeiten, aufgrund der Verschiedenheit des Anströmungsprofils in der Rotorflache jedoch in einigen anderen Bereichen eher suboptimal arbeiten. Dies ergibt sich unmittelbar aus der sehr engen Abhängigkeit der Gleitzahl zum Anströmwinkel und die Folge dessen ist, dass die Lasten auf das Rotorblatt extrem schwanken können, weil auch der Auftrieb ($c_e$) des Rotorblattes in etwa proportional ist zur Gleitzahl.

Als Maßnahme zur Verbesserung der vorgenannten Probleme und zur Vermeidung von deren Nachteilen ist es natürlich möglich, durch ein entsprechendes Pitchen der Rotorblätter bzw. Gieren des gesamten Rotors stets eine optimale Einstellung zu finden. Es ist aber leicht für den Fachmann einsichtig, dass bei dieser Konzeption praktisch ständig die Rotorblätter in den Wind angestellt werden müssen (also gepitcht werden müssen) und/oder auch ständig die Azimutantriebe den Rotor neu ausrichten müssen, ohne dass substantiell sich die Lage verbessern wird.

Aus dem Buch von Robert Gasch "Windkraftanlagen", 1996, Teubner, Stuttgart, XP002329739, Kapitel 5,2 sind Ausführungen rotierender Flügel von Windkraftanlagen offenbart und inverse Gleitzahlen unterschiedlicher Profile dargestellt.

Das Dokument von Erich Hau, "Windkraftanlagen", 1996, Springer, Berlin, XP002329740, Seiten 101 bis 109 betrifft aerodynamische Profile von Windrotoren, wobei u.a. Gleitzahlen unterschiedlicher Profile bei glatter und rauher Oberflache gegenübergestellt werden.

Aus der DE 38 25 241 ist eine Windturbine mit einem an einem Mast gelagerten Rotor mit mindestens einem an Rotorarmen angeordneten Windfangblatt bekannt. Die Windfangblätter sind als Hohlkastenprofile ausgebildet. Die DE 830 627 betrifft ein Windradflügel mit Endscheiben an den Flügelanden.

Aufgabe der Erfindung ist es, die vorgenannten Nachteile zu vermeiden und für eine bessere Gesamtperformance zu sorgen.

Die Erfindung löst die Aufgabe durch ein Rotorblattdesign mit dem Merkmal nach Anspruch 1. Vorteilhafte Weiterbildungen sind in den Unteransprüchen beschrieben.

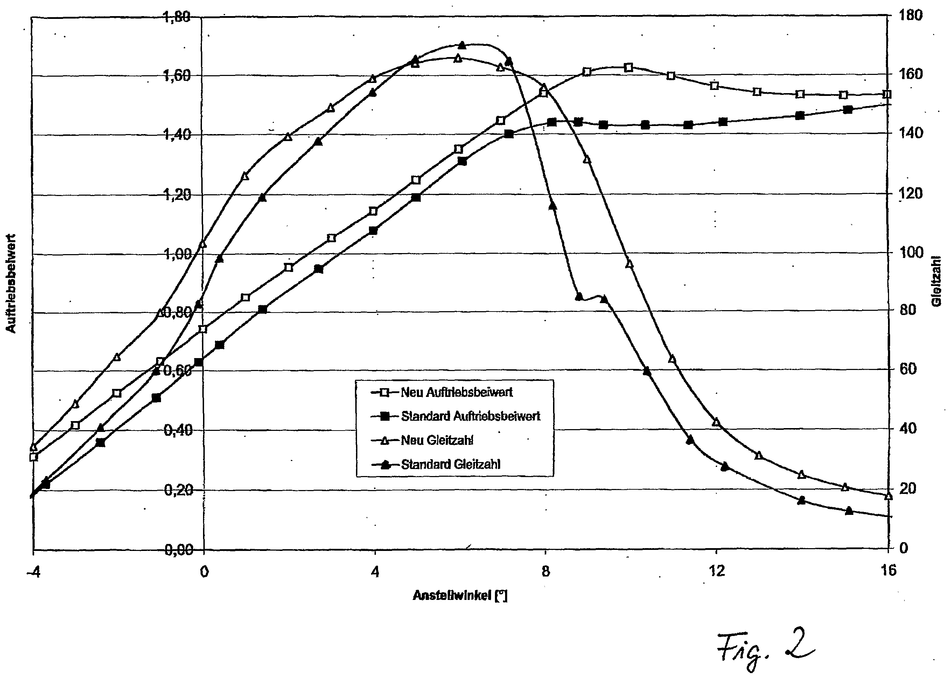

Eine der wesentlichen Eigenschaften des erfindungsgemäßen Rotorblattdesigns besteht darin, dass die Gleitzahl über einen recht großen Anstellwinkelbereich nahezu hoch bleibt, wobei jedoch der höchste Wert der Gleitzahl nunmehr hinter dem Optimum der bisherigen Gleitzahl aus dem Stand der Technik zurückbleibt. Anders ausgedrückt, die Gleitzahl des erfindungsgemäßen Rotorblatts ist bei optimaler Einstellung des Anstellwinkels - **im Maximum** - geri nger als beim Stand der Technik, gleichzeitig führt aber ein Abweichen von der optimalen Einstellung nicht sofort zu einer substantiellen Reduzierung der Gleitzahl und des Auftriebsbeiwertes und damit zu einem Auftriebsverlust, sondern Abweichungen, die im Bereich von z.B. ±0,5 bis 3° vom optimalen Einstellwinkel liegen, führen nicht zur substantiellen Reduzierung der Gleitzahl und damit zur Reduzierung des Auftriebs mit der Folge, dass der gesamte Blattwirkungsgrad verbessert wird. Auch wird damit eine deutlich bessere Lastverteilung und eine deutlich geringe Lastschwankung (ΔL/dt) erreicht. **Wie aus Fig. 2 zu erkennen, ist der "Sattel" der Gleitzahlkurve des erfindungsgemäßen Rotorblattes im Bereich zwischen 4 und 8° Anstellwinkel deutlich breiter als bei einem bekannten Rotorblatt.**

Die beanspruchte Auslegung des Rotorblatts erfolgt insbesondere im mittleren Drittel des Rotorblatts, also im sogenannten Bereich des Mainboards des Rotorblattes. Dies ist der Bereich, der zwischen dem Rotorblattanschlussbereich bzw. Rotorblattwurzelbereich einerseits und dem Tipbereich, also dem Spitzenbereich des Rotorblattes liegt.

Fig. 2 zeigt das Verhalten des Auftriebsbeiwertes bzw. der Gleitzahl einerseits zum Anstellwinkel. Insbesondere die Kurvendiagramme zum Anstellwinkel zeigen, dass bei einem Standardrotorblatt die Gleitzahl im Bereich des Anstellwinkels von etwa 6° ihr absolutes Maximum erreicht, welches bei etwa 170 liegt. Schon bei Abweichen von dem Anstellwinkel von 6° um 1°, also entweder auf 7° oder 5° sinkt die Gleitzahl stark ab und insbesondere zu höheren Anstellwinkeln hin ist die Gleitzahl bereits halbiert, wenn der Anstellwinkel einen Wert von etwa 9° annimmt. Zu kleineren Anstellwinkeln hin gibt es ebenfalls einen sehr starken Abfall, welcher jedoch nicht ganz so steil verläuft wie bei der Abweichung des Anstellwinkels zu höheren Anstellwinkeln.

In dem Diagramm ist auch das Verhalten der Gleitzahl bei einem erfindungsgemäßen Rotorblatt zu sehen. Im Bereich des Anstellwinkels von etwa 6° ist wiederum das Maximum ausgeprägt und dieses Maximum liegt unterhalb des Maximums der Gleitzahl bei einem Standardrotorblatt. Allerdings ist der "Sattel" des Optimums nunmehr deutlich breiter, wie man an den schneidenden Kurven erkennt und dann, wenn beispielsweise der Anstellwinkel im Bereich von 4 bis 8° liegt, also ± 2° vom optimalen Anstellwinkel 6°, ist die Gleitzahl nur um etwa 10% von ihrem Optimalwert abgesenkt. Im Bereich von etwa 4,5° bis -4° einerseits und im Bereich von etwa 7° bis 16° liegt die Gleitzahl stets über der Gleitzahlkurve für ein bekanntes Rotorblatt.

Wie auch zu erkennen, wird durch die erfindungsgemäße Ausbildung des Rotorblattes insgesamt der Auftriebsbeiwert des gesamten Rotorblattes verbessert, was einhergeht mit einer Effizienzsteigerung von etwa 15% des Rotorblattes.

Vor allem werden auch nunmehr die Lastschwankungen nicht mehr so groß sein wie bisher und es besteht nicht bei jedweder kleinsten Änderung des Anstellwinkels die Notwendigkeit gleich entsprechende Maßnahmen vorzunehmen, den Anstellwinkel wieder auf den gewünschten Optimalwert, im vorliegenden Beispiel 6°, einzustellen.

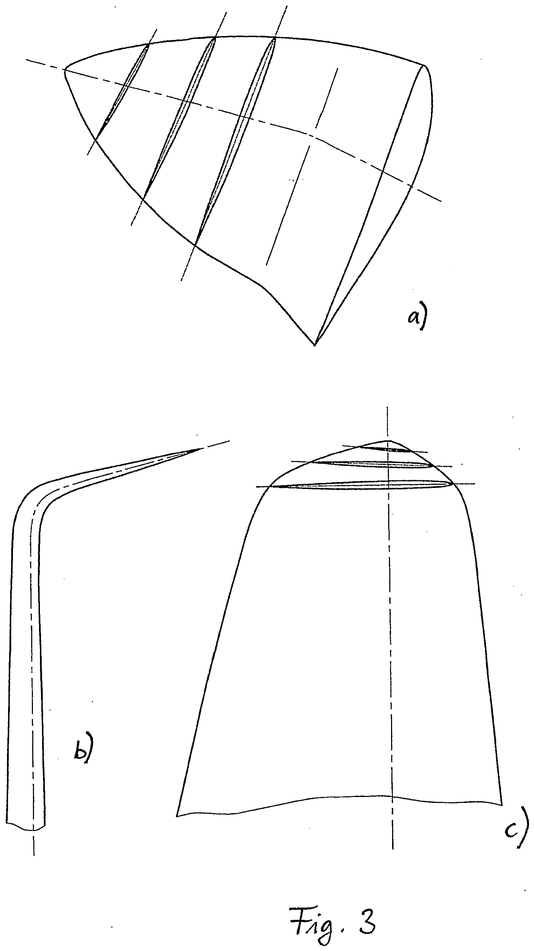

Fig. 3 zeigt verschiedene Ansichten eines Rotorblatttips also eines Rotorblattendstückes. Fig. 3a zeigt ein Rotorblatttip in der perspektivischen Darstellung, Fig. 3b aus der Seitenansicht und Fig. 3c in der Aufsicht.

Dieser Rotorblatttip wird auch regelmäßig als Randbogen bezeichnet. In Fig. 3a ist zu erkennen, dass der Randbogen mit drei Profilschnitten und der Fädelachse dargestellt ist.

Durch die drei verschiedenen Darstellungen ist es möglich, die Drehung des Profils des Randbogens um die Fädelachse herum zu verdeutlichen. Dabei ist die dargestellte Drehung vom Betrag her größer als die in der Beschreibung angegebene Gradzahl, um aus Darstellungsgründen die Darstellung in der zeichnerischen Darstellung überhaupt einigermaßen wahrnehmbar zu machen.

Besonders betont sei an dieser Stelle nochmals, dass die erfindungsgemäße Ausbildung des Rotorblattes im Besonderen den mittleren Teil, also das sogenannte Mainboard betrifft, also den Bereich, der zwischen dem Rotorblattwurzelbereich einerseits und dem Tipbereich liegt. Das Mainboard kann auch allgemein als das "mittlere Drittel" eines Rotorblattes beschrieben werden, wobei die konkreten Abmaße über das Mainboard hiervon abweichen können und das Mainboard z.B. auch etwa bis zu 60% der Rotorblattlänge einnehmen kann.

Zusätzlich oder unabhängig von der vorgenannten Ausbildung des Rotorblattes kann auch eine weitere Verbesserung erzielt werden - **s. Fig. 3a bis 3c** -, wenn die Rotorblattspitze, also der sogenannte Tip in einem gestimmten Bereich **um die** Fädelachse **herum** verdreht ist, z.B. um etwa 4 bis 8°, vorzugsweise ungefähr 5°, um die Fädelachse **herum** gedreht ist (Twist). Dann befindet sich der Twist in einem sogenannten Nullanströmwinkel, d.h., dass der Tip selbst keinen Beitrag zum Auftrieb leistet. Eine typische Ausbildung eines Tips bzw. einer entsprechenden Tip-Endscheibe ist bekannt aus dem bereits genannten Buch von Erich Hau, Seite 126 (Bild 535).

Nach der allgemeinen Lehrmeinung errechnen sich die dimensionierenden Lasten eines Rotorblattes als Produkt des Quadrats der Windgeschwindigkeit, der Rotorblattfläche und des Auftriebsbeiwertes. Als Formel ausgedrückt wären das

**dimensionierende Last = $v^2$ x A x $c_A$,**

wobei mit der Rotorfläche A die Fläche gemeint ist, die der Rotor abdeckt (überstreicht).

Dies in Betrachtung aus den Lehrbüchern ist recht grob und entspricht nicht immer der Realität. Die größte Last eines Rotorblattes wirkt nicht im Normalbetrieb hierauf ein, sondern dann, wenn eine sogenannte 50-Jahr-Böe das Rotorblatt von der Seite "erwischt". In diesem Fall beaufschlagt die Böe eben die gesamte Rotorblattfläche. Hierbei ist gleich erkennbar, dass der Auftriebsbeiwert $c_A$ keine Rolle spielt, in Betracht käme hier eher der Widerstandsbeiwert $c_w$. Dieser ist aber für diese mehr oder weniger ebene Rotorblattoberfläche stets konstant, denn wenn der Wind auf ein Blatt trifft, dann trifft er eben auf ein Brett. Diese Situation, nämlich die volle seitliche Anströmung, ist die ungünstigste Situation, in der die größte Last entsteht, für die das Rotorblatt dimensioniert sein muss, eben eine dimensionierende Last.

Aus dem Vorstehenden ist erkennbar, dass bei einem konstanten Widerstandsbeiwert einzig und allein die Fläche des Rotorblattes ausschlaggebend ist. Dies ist auch der Grund für die möglichst schlanke Ausführung der Rotorblätter.

Es ist aber bekannt, dass die Leistung einer Windenergieanlage entscheidend von der Länge der Rotorblätter abhängt. Daher sind lange, schlanke Blätter breiten kurzen Blättern bislang vorzuziehen. Allerdings darf dabei nicht übersehen werden, dass diese Betrachtung nicht für den Blattinnenbereich (main board) gilt, da hier die Situation eine grundsätzlich andere ist.

Schließlich ist die Relativgeschwindigkeit des Rotorblattes zur umströmenden Luft im Bereich der Blattwurzel die geringste und steigt zur Blattspitze hin kontinuierlich an. Deshalb ist die hier beschriebene Rotorblattform mit dem schlanken Außenbereich und der optimierten Gleitzahl eine besonders vorteilhafte Lösung.

**Patentansprüche**

1. Rotorblatt, das im mittleren Bereich des Rotorblattes, dem sogenannten Mainboard eine Gleitzahl aufweist, welche im Bereich von etwa $\pm 2°$ vom optimalen Anstellwinkel einen Gleitzahlwert von mehr als 80%, bevorzugt 90% und mehr des Maximalwerts der Gleitzahl aufweist, so dass bei Änderungen des Anstellwinkels im Bereich von etwa $\pm 2°$ des optimalen Anstellwinkels kein Anstellen des Rotorblattes erforderlich ist,
**dadurch gekennzeichnet, dass** das Rotorblatt einen Tip bzw. eine Tip-Endscheibe umfasst, die sich wie nach Art eines Winglet aus der Rotorblattebene heraushebt, wobei diese Endscheibe in ihrer Mittenebene um etwa 4 bis 8°, bevorzugt 4 bis 6°, insbesondere bevorzugt um etwa 5° um die Fädelachse herum gedreht ist.

2. Windenergieanlage, bei der der Anstellwinkel des Rotorblattes einstellbar ist, mit einem Rotor, der wenigstens ein Rotorblatt gemäß Anspruch 1 aufweist.

**Claims**

1. A rotor blade which in the central region of the rotor blade, the socalled main board, has a lift-drag ratio which in the region of about $\pm 2°$ from the optimum pitch angle has a lift-drag ratio value of more than 80%, preferably 90% and more of the maximum value of the lift-drag ratio, so that upon changes in the pitch angle in the region of about $\pm 2°$ from the optimum pitch angle no pitch adjustment of the rotor blade is required,
**characterised in that** the rotor blade includes a tip or a tip end plate which rises out of the plane of the rotor blade in the manner of a winglet, wherein said end plate is turned about the thread axis in its central plane by about 4° to 8°, preferably 4° to 6°, particularly preferably about 5°

2. A wind power installation in which the pitch angle of the rotor blade is adjustable, comprising a rotor having at least one rotor blade according to claim 1.

**Revendications**

1. Pale de rotor qui présente dans la zone médiane de la pale de rotor, de ce que l'on appelle plaque-mère, une finesse qui présente, dans la plage d'environ $\pm 2°$ de l'angle d'attaque optimal, une valeur de finesse de plus de 80 %, de préférence 90 % et plus de la valeur maximale de la finesse, de sorte que, en cas de modifications de l'angle d'attaque dans la plage d'environ $\pm 2°$ de l'angle d'attaque optimal, aucune attaque de la pale de rotor n'est requise,
**caractérisée en ce que** la pale de rotor comporte un bout ou un disque d'extrémité de bout qui se lève, comme une ailette, du plan de pale de rotor, dans laquelle ce disque d'extrémité est tourné dans son plan médian d'environ 4 à 8°, de préférence 4 à 6°, en particulier de préférence d'environ 5° autour de l'axe de filage.

2. Eolienne, pour laquelle l'angle d'attaque de la pale de rotor est réglable, avec un rotor qui présente au moins une pale de rotor selon la revendication 1.

Fig. 1

Fig. 2

a)

b)

c)

Fig. 3

EP 1 716 333 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3825241
- DE 830627

**In der Beschreibung aufgeführte Nicht-Patentliteratur**

- **ROBERT GASCH.** Windkraftanlagen. Teubner, 1996
- **ERICH HAU.** Windkraftanlagen. Springer, 1996, 101-109